**Europäisches Patentamt**

**European Patent Office**

**Office européen des brevets**

(19)

(11) Veröffentlichungsnummer: **0 177 761**
**A1**

(12) # EUROPÄISCHE PATENTANMELDUNG

(21) Anmeldenummer: **85111193.0**

(22) Anmeldetag: **05.09.85**

(51) Int. Cl.⁴: **F 16 J 15/36**

(30) Priorität: **06.10.84 DE 3436798**

(43) Veröffentlichungstag der Anmeldung: **16.04.86**
**Patentblatt 86/16**

(84) Benannte Vertragsstaaten: **DE FR GB IT SE**

(71) Anmelder: **GOETZE AG,**
**Bürgermeister-Schmidt-Strasse 17,**
**D-5093 Burscheid 1 (DE)**

(72) Erfinder: **vom Stein, Karl, Am Sportfeld 15,**
**D-5093 Burscheid (DE)**
Erfinder: **Vossieck, Paul, Dürscheid 4, D-5093 Burscheid**
**(DE)**

(54) **Gleitringdichtung.**

(57) Gleitringdichtung in einfacher oder doppeltwirkender Ausführung zur Abdichtung unter Druck stehender Medien mit einem einstückig ausgebildeten Balgen (2), der mit mindestens einem Gleitring (1) sowie einer Druckfeder (5) zusammenwirkt, dergestalt, daß der Balgen (2) zum Zwecke der Spannungsminimierung im Betriebszustand in der Form konzipiert ist, daß seine Herstellungsform in etwa der sich im Betriebszustand unter Druckeinwirkung einstellenden Kontur entspricht.

- 1 -

## Gleitringdichtung.

Die Erfindung betrifft eine Gleitringdichtung zur Abdichtung von insbesondere unter Druck stehenden Medien, bestehend aus einem Gleitring, einem Balgen, dessen eines axiales Ende mit dem Gleitring verbunden und dessen anderes axiales Ende als Haftteil ausgebildet ist, sowie einer konzentrisch zwischen Haftteil und Gleitring angeordneten Druckfeder.

Durch die DE-PS 26 48 328 ist eine Gleitringdichtung bekannt, bei der der Balgen mittels einer Haltekappe spannungsfrei in mittlerer Einbaulage innerhalb des ihn umgebenden Gehäuses gehalten wird. Üblicherweise bewirkt die mit dem Balgen zusammenwirkende Druckfeder, ohne Verwendung einer Haltekappe, Zugspannungen im Gummibalgen, die über längere Zeit zur Beschädigung des Balgens führen können. Um dies zu vermeiden, wird der Balgen in der Einbaulage vulkanisiert und mittels der Haltekappe in mittlerer Eainbaulage gehalten. Diese Art von Gleitringdichtungen ist in der Regel nur für den Einsatz unter relativ geringen Drücken (etwa 1 bar) geeignet. Bei Druckbeaufschlagung würde sich der spannungsfrei innerhalb der Gleitringdichtung gelagerte Balgen verformen und so das Kräftegleichgewicht unwirksam werden.

Balgen unterschiedlichster Konturen im Bereich zwischen Gleitring und Haftteil zählen zum Stand der Technik. So offenbart das deutsche Gebrauchsmuster 18 58 504 einen

- 2 -

wellenförmig ausgebildeten und die DE-PS 22 25 776 einen, in Längsrichtung gesehen, etwa U-förmig ausgebildeten Balgen. Sämtliche Dichtungen sind nicht unter Hochdruckbedingungen einsetzbar, da sich die Balgen verformen und gegebenenfalls an vorspringenden Kanten korrespondierender Bauteile abgeschert werden.

Der Erfindung liegt nunmehr die Aufgabe zugrunde, eine Gleitringdichtung zu konzipieren, die einerseits unter Hochdruckbedingungen einsetzbar sein soll, ohne daß sich durch auftretende Balgenverformungen Nachteile bei der Abdichtung einstellen sollen, und andererseits nur aus wenigen Teilen besteht.

Diese Aufgabe wird erfindungsgemäß dadurch gelöst, daß die Herstellungsform des Balgens in etwa der sich im Betriebszustand unter Druckeinwirkung einstellenden Kontur entspricht. Durch diese Maßnahme wird sichergestellt, daß der Balgen unter Druckeinwirkung keine beziehungsweise nur eine sehr geringe Verformung erfährt. Das Kräftegleichgewicht bleibt im wesentlichen erhalten, und die Dauerstandfestigkeit wird erhöht. Indem der Balgen beziehungsweise dessen Kontur den jeweils maximal im Betriebszustand auftretenden Drücken angepaßt wird, ist er für unterschiedlichste Anwendungsfälle einsetzbar.

Eine Ausführungsform der Erfindung ist darin zu sehen, daß der Balgen im Bereich der der Gleitfläche des Gleitringes abgewandten Stirnfläche zumindest teilweise zu dieser parallel verläuft. Ebenfalls möglich und auch

- 3 -

wünschenswert ist, daß der Balgen im Bereich zwischen Gleitring und Haftteil zumindest teilweise parallel zum abzudichtenden Maschinenteil, vorzugsweise einer Welle, verläuft. Bedingt durch diese Ausbildung des Balgens, kommen diese abgeflacht ausgebildeten Bereiche des ansonsten in gerundeter Form verlaufenden Balgens unter Druckeinwirkung, ohne weiter verformt zu werden, an der Welle beziehungsweise der der Gleitfläche abgewandten Stirnfläche des Gleitringes zur Anlage. Indem der Balgen so geformt wird, wie er sich im Einbauzustand unter Druckeinwirkung tatsächlich einstellt, werden sonst auftretende Spannung gezielt schon vorher unterbunden. Der Balgen erhält somit eine optimierte Form.

Vorzugsweise verlaufen die abgeflachten Bereiche im nicht montierten Zustand der Dichtung mit definiertem Abstand zu den korrespondierenden Gegenlaufflächen. Der Spalt wird mit äußerer Druckeinwirkung, sei es durch die Montage selbst oder aber durch das unter Druck stehende Medium geschlossen. Bevorzugt weist der Balgen im Bereich zwischen Gleitring und Haftteil einen etwa Z-förmigen Querschnitt auf.

Einem weiteren Gedanken der Erfindung gemäß, stützt sich der in den Haftteil auslaufende Bereich des Balgens an einem separaten, mit dem Maschinenteil zusammenwirkenden Axialanschlag ab. Dieser ist vorzugsweise aus einem in eine umlaufende Nut des Maschinenteiles eingelegten, im Bereich einer Umfangsstelle aufgeschnittenen Ring gebildet. Durch diese Maßnahme wird ohne weitere Klemmelemente

- 4 -

eine axiale Abstützung für den Balgen gebildet, die insbesondere bei nicht abgesetzten Wellen zur Anwendung kommt. Der Ring ist, einem weiteren Gedanken der Erfindung gemäß, als innenspannender Kolbenring ausgebildet.

Ebenfalls denkbar ist, daß zur Bildung einer doppeltwirkenden Gleitringdichtung eine zweite aus Gleitring, Balgen und Druckfeder bestehende Dichtung verwendet wird, die sich ebenfalls, in entgegengesetzter axialer Richtung wirkend, am Axialanschlag abstützt. Vorzugweise übergreifen die spiegelbildlich geformten stirnseitigen Bereiche des Balgens beziehungsweise des Hafteiles, einander berührend, den Axialanschlag und bilden so eine weitere Abdichtstelle.

Alternativ zu der zweiteiligen, vorab angesprochenen Variante wird vorgeschlagen, daß der Balgen zur Bildung einer doppeltwirkenden Gleitringdichtung als einstückiger Doppelbalgen ausgebildet ist, der in seinem axial mittleren Bereich mit dem Maschinenteil zusammenwirkt. Derartige Dichtelemente sind im Prinzip zwar bereits durch das deutsche Gebrauchsmuster 78 29 170 bekannt. Der Kerngedanke der Erfindung betrifft jedoch nicht die Ausbildung einer doppelt wirkenden Gleitringichtung an sich, sondern die Übertragung des Erfindungsgedankens bei einfach wirkenden Gleitringdichtungen auf solche, die in zwei Richtungen abdichten. Auch hier ist die Balgenkontur optimiert, d. h. den jeweiligen Druckverhältnissen im Betriebszustand angepaßt. Vorzugsweise wird der sich hier einstellende mittlere Hafteil zwischen den beiden Gleit-

- 5 -

ringen mittels eines radial wirkenden Klemmelementes an das korrespondierende Maschinenelement angedrückt. Die die Anpreßkraft erzeugende Feder kann sowohl einstückig, sich zwischen den beiden Gleitringen erstreckend, als auch zweiteilig ausgebildet sein.

Ferner wird ein Verfahren zur Herstellung eines Balgens für einfach oder doppeltwirkende Gleitringdichtungen vorgeschlagen, indem ein der späteren Kontur des Balgens etwa entsprechender Balgen montiert, unter Betriebsdruck gebracht und anschließend in diesem verformten Zustand eingegossen wird, wobei der Querschnitt des aufgeschnittenen Balgens als Negativform für die herzustellende, der tatsächlich sich im Betriebszustand einstellenden Balgenkontur dient. Durch dieses Verfahren ist erkennbar, wo die Spannungsspitzen in den einzelnen Balgenbereichen auftreten. Diese können zum Beispiel durch partielle Materialentfernung abgebaut werden.

Die Erfindung ist in der Zeichnung dargestellt und wird im folgenden näher beschrieben. Es zeigen:

Figur 1 Einfach wirkende Gleitringdichtung mit optimiertem Balgen

Figur 2 Doppelt wirkende Gleitringdichtung mit einstückig ausgebildetem Balgen mit optimiertem Querschnitt

Figur 3 Ausschnitt einer zweiteiligen, als doppelt wirkende Gleitringdichtung einsetzbaren Dichtung.

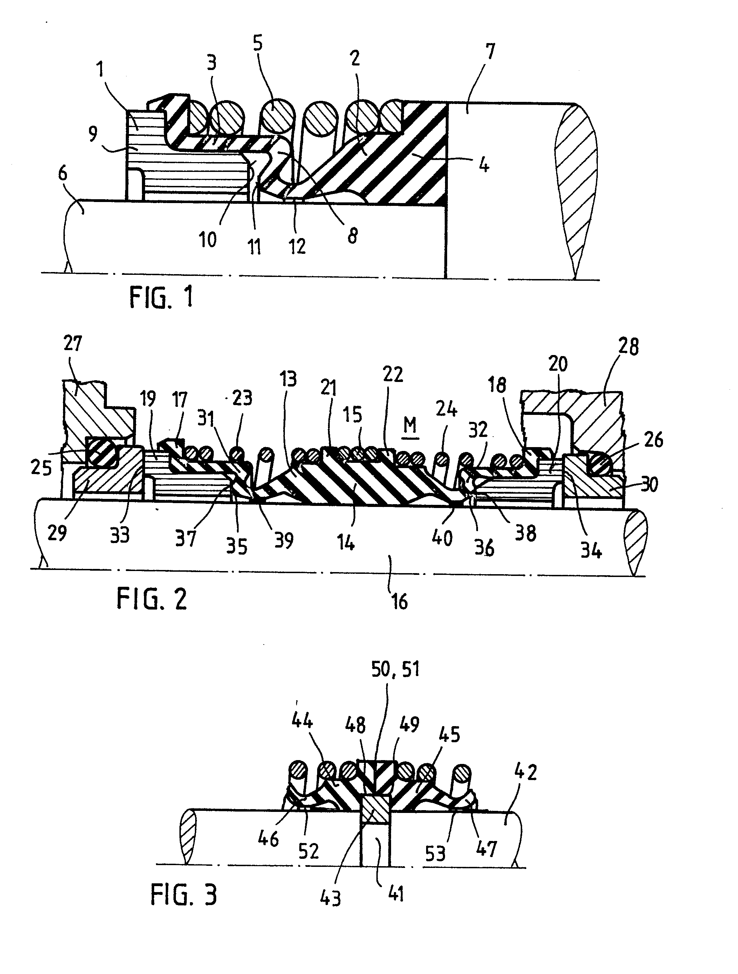

Figur 1 zeigt eine einfach wirkende Gleitringdichtung,
Sie besteht aus einem winkelförmigen Gleitring 1, einen
Balgen 2, dessen eines axiales Ende 3 mit dem Gleitring 1
verbunden und dessen anderes axiales Ende 4 als Haftteil
ausgebildet ist, sowie einer konzentrisch sich zwischen
dem Haftteil 4 und dem Gleitring 1 erstreckenden zylindrischen Druckfeder 5. Das Haftteil 4 wirkt mit einer
Welle 6 zusammen und stützt sich axial an einem Wellenansatz 7 ab. Der Balgen 2 ist axial zwischen Gleitring 1
und Haftteil 4, einen etwa Z-förmigen Querschnitt 8 bildend, geformt. Seine Herstellungsform ist in etwa der
sich im Betriebszustand unter Druckeinwirkung einstellenden Kontur angepaßt, um Spannungen während des Betriebszustandes gar nicht erst auftreten zu lassen beziehungsweise zu minimieren. Zu diesem Zweck weist der Balgen (2)
im Bereich der der Gleitfläche 9 des Gleitringes 1 abgewandten Stirnfläche 10 eine zu dieser zumindest teilweise
parallel verlaufende Fläche 11 auf. Analog dazu ist der
mit der Welle 6 korrespondierende Balgenbereich (12)
ebenfalls abgeflacht ausgebildet. Im nicht eingebauten
Zustand berühren die Abflachungen 11,12 die korrespondierenden Gegenflächen 10,6 nicht.

Figur 2 zeigt eine doppelt wirkende Gleitringdichtung im
Einbauzustand. Die Gleitringdichtung besteht aus einem
einstückig ausgebildeten Balgen 13 in spiegelbildlicher
Ausführung. Der axial mittlere Bereich 14 ist als Haftteil ausgebildet und wird mittels eines sich an Radialansätzen 21,22 axial abstützenden Klemmelementes 15, in
Form einer Feder, radial an die Welle 16 gepreßt. In den axial äußeren Bereichen 17,18 des Balgens 13 sind zwei Gleitringe 19,20 eingeknüpft. Axial zwischen den Gleitringen 19,20 und den Radialansätzen 21,22 im Bereich des Haftteiles 14 erstreckt sich jeweils eine zylindrische Druckfeder 23,24. Die Gleitringe 19,20 wirken mit zwei statisch durch O-Ringe 25,26 gegenüber Aufnahmeteilen 27,28 abgedichteten Gegenringen 29,30 zusammen. Erfindungsgemäß entspricht die Herstellungsform des Balgens 13 in etwa der sich im Betriebszustand unter Druckeinwirkung einstellenden Kontur. Im Bereich der beiden Gleitringe 19,20 ist die jeweilige Balgenkontur 31,32 etwa Z-förmig ausgebildet. Die den Gleitflächen 33,34 abgewandten Balgenbereiche 35,36 sind abgeflacht ausgebildet und liegen unter Druckeinwirkung durch das abzudichtende Medium M an den korrespondierenden Stirnflächen 37,38 des Gleitringes 19,20 an. Analog dazu sind die mit der Welle 16 zusammenwirkenden Balgenbereiche 39,40 ebenfalls abgeflacht ausgebildet.

Figur 3 zeigt eine ähnliche Gleitringdichtung wie in Figur 1, mit dem Unterschied, daß zwecks Bildung einer nicht weiter dargestellten, doppelt wirkenden Gleitringdichtung zwei spiegelbildlich ausgebildete Dichtungen verwendet werden. Zur axialen Abstützung der beiden Dichtungen ist ein in einer Nut 41 einer Welle 42 eingesetzter, radial nach innen spannender Ring 43, vorzugsweise ein Kolbenring, vorgesehen. Die in die Haftteile 44,45 auslaufenden Balgenbereiche 46,47 sind mit entsprechenden umlaufenden Nuten 48,49 versehen und werden axial auf den Kolbenring 43 aufgeschoben, wobei ihre einander zugewandten Stirnflächen 50,51 einander dichtend berühren.
Die Balgen 46,47 sind analog zu den Figuren 1 und 2 mit
Abflachungen 52,53 versehen.

- 1 -

Patentansorüche:

1.  Gleitringdichtung zur Abdichtung von insbesondere unter Druck stehenden Medien, bestehend aus einem Gleitring, einem Balgen, dessen eines axiales Ende mit dem Gleitring verbunden und dessen anderes axiales Ende als Haftteil ausgebildet ist, sowie einer konzentrisch zwischen Haftteil und Gleitring angeordneten Druckfeder, dadurch gekennzeichnet, daß die Herstellungsform des Balgens (2,13,44,45) in etwa der sich im Betriebszustand unter Druckeinwirkung einstellenden Kontur entspricht.

2.  Gleitringdichtung nach Anspruch 1, dadurch gekennzeichnet, daß der Balgen (2,13) im Bereich der der Gleitfläche (9,33,34)) des Gleitringes (1,19,20) abgewandten Stirnfläche (10,37,38) zumindest teilweise zu dieser parallel verläuft.

3.  Gleitringdichtung nach den Ansprüchen 1 und 2, dadurch gekennzeichnet, daß der Balgen (2,13) im Bereich zwischen Gleitring (1,19,20) und Haftteil (4,14) zumindest teilweise parallel zum abzudichtenden Maschinenteil (6,16) verläuft.

4.  Gleitringdichtung nach den Ansprüchen 1 bis 3, dadurch gekennzeichnet, daß die parallel zum Gleitring (1,19,20) und zum Maschinenteil (6,16) verlaufenden Bereiche des Balgens (2,13) durch Abflachungen (11,

- 2 -

12,35,36,39,40) des ansonsten gerundet verlaufenden Balgens gebildet sind.

5. Gleitringdichtung nach den Ansprüchen 1 bis 4, dadurch gekennzeichnet, daß die abgeflachten Bereiche (11,12) im nicht montierten Zustand der Dichtung mit definiertem Zustand zu den korrespondierenden Gegenflächen (6,10) verlaufen.

6. Gleitringdichtung nach den Ansprüchen 1 bis 5, dadurch gekennzeichnet, daß der Balgen (2,13) einen etwa Z-förmigen Querschnitt im Bereich zwischen Gleitring (1,19,20) und Hafteil (4,14) aufweist.

7. Gleitringdichtung nach den Ansprüchen 1 bis 6, dadurch gekennzeichnet, daß sich der in den Hafteil (4,44,45) auslaufende Bereich des Balgens (2,46,47) an einem separaten mit dem Maschinenteil (6,42) zusammenwirkenden Axialanschlag (7,43) abstützt.

8. Gleitringdichtung nach den Ansprüchen 1 bis 7, dadurch gekennzeichnet, daß der Axialanschlag (43) aus einem in eine umlaufende Nut (41) des Maschinenteiles (42) eingelagerten, im Bereich einer Umfangsstelle aufgeschnittenen Ring besteht.

9. Gleitringdichtung nach den Ansprüchen 1 bis 7, dadurch gekennzeichnet, daß der Ring (43) als innenspannender Kolbenring ausgebildet ist.

10. Gleitringdichtung nach den Ansprüchen 1 bis 8, gekennzeichnet durch eine zweite, aus Gleitring, Balgen (47) und Feder (24) bestehende Dichtung, die sich zumindest an dem Axialanschlag (43) abstützt.

11. Gleitringdichtung nach den Ansprüchen 1 bis 9, dadurch gekennzeichnet, daß die spiegelbildlich geformten Bereiche der Balgen (47,46) beziehungsweise der Haftteile (44,45), einander stirnseitig berührend (50,51), den Axialanschlag (43) übergreifen.

12. Gleitringdichtung nach den Ansprüchen 1 bis 5, dadurch gekennzeichnet, daß der Balgen (13) zur Bildung einer doppeltwirkenden Gleitringdichtung als Doppelbalgen ausgebildet ist, der in seinem axial mittleren Bereich (14) mit dem Maschinenteil (16) zusammenwirkt.

13. Gleitringdichtung nach Anspruch 11, dadurch gekennzeichnet, daß das Haftteil (14) durch ein radial wirkendes Klemmelement (15) an das Maschinenteil (16) andrückbar ist.

14. Verfahren zur Herstellung eines Balgens für eine einfach oder doppeltwirkende Gleitringdichtung durch Vulkanisation eines Elastomermaterials, dadurch gekennzeichnet, daß ein der späteren Kontur des Balgens etwa entsprechender Balgen montiert, unter Betriebsdruck gebracht und anschließend in diesem verformten Zustand eingegossen wird, wobei der Quer-

- 4 -

schnitt des aufgeschnittenen Balgens als Negativform
für die herzustellende, der tatsächlich sich im Betriebszustand einstellenden Balgenkontur dient.

FIG. 1

FIG. 2

FIG. 3

Europäisches
Patentamt

**EUROPÄISCHER RECHERCHENBERICHT**

0.177761

Nummer der Anmeldung

EP  85 11 1193

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | FR-A-2 149 079  (VSESOJUZNY) <br> * Insgesamt * <br><br> --- | 1-3 | F 16 J  15/36 |
| X | DE-B-1 061 145  (KUPFER-ASBEST) <br><br> *  Spalte 4, Zeilen 4-21; Figuren 1-3 * <br><br> --- | 1-3,6, 7 | |
| A | GB-A-  648 847  (CRANE) <br><br> --- | 1 | |
| A | US-A-2 506 447  (GREINER) <br><br> ----- | | |

**RECHERCHIERTE SACHGEBIETE (Int. Cl.4)**

F 16 J

Der vorliegende Recherchenbericht wurde für alle Patentansprüche erstellt.

| Recherchenort <br> DEN HAAG | Abschlußdatum der Recherche <br> 20-01-1986 | Prüfer <br> LEGER M.G.M. |
|---|---|---|